# EUROPÄISCHE PATENTSCHRIFT

(11) **EP 1 829 665 B1**
(45) Veröffentlichungstag und Bekanntmachung des Hinweises auf die Patenterteilung: **28.05.2008**
(21) Anmeldenummer: 06004425.2
(22) Anmeldetag: 04.03.2006
(51) Int. Cl.: B29C 47/08

(54) **Schneckenwellen-Kupplung**
Coupling for extruder screw
Dispositif de couplage pour vis d'extrudeuse

(43) Veröffentlichungstag der Anmeldung: 05.09.2007
(73) Patentinhaber: Coperion Werner & Pfleiderer GmbH & Co. KG, 70469 Stuttgart (DE)
(72) Erfinder: Riehle, Ralf, 72144 Dußlingen (DE)
(74) Vertreter: Rau, Manfred

(56) Entgegenhaltungen:
- EP-A- 0 658 414
- US-A- 4 527 899
- US-A- 4 943 182
- US-A- 5 874 682
- US-B1- 6 470 560

## Beschreibung

Die Erfindung betrifft eine Schneckenwellen-Kupplung zur Verbindung einer Abtriebs-Welle eines Getriebes und einer koaxial angeordneten Schneckenwelle eines Extruders nach dem Oberbegriff des Anspruches 1. Insbesondere handelt es sich um Schneckenwellen-Kupplungen zwischen mehreren Abtriebs-Wellen eines Verteiler-Getriebes und den koaxial hierzu angeordneten Schneckenwellen eines Mehr-Wellen-Extruders.

Bei Mehr-Wellen-Extrudern, insbesondere Zwei-Wellen-Extrudern, ist der Achs-Abstand der Schneckenwellen durch die Geometrie des Extruders vorgegeben. Da der Außendurchmesser jeder Schneckenwellen-Kupplung etwas kleiner sein muss als der erwähnte Achs-Abstand, herrschen zwischen dem Getriebe und dem Extruder außerordentlich beengte Verhältnisse zum Lösen oder Wiederzusammenfügen der Kupplung. Dies wird noch dadurch verstärkt, dass zwischen Verteiler-Getriebe und Extruder eine sogenannte Laterne angeordnet ist, d. h. eine käfigartige Verbindung von Getriebe und Extruder, durch die das Fluchten der Wellen sichergestellt wird.

Aus der US 5,874,682 A ist eine Schneckenwellen-Kupplung nach dem Oberbegriff des Anspruches 1 bekannt, bei der die beiden Gewinde-Hülsen jeweils mittels Feingewinden mit der Kupplungs-Hülse verbunden sind, so dass das Lösen einer solchen Kupplung mit erheblichem Arbeitsaufwand beim Abschrauben der Gewinde-Hülsen verbunden ist.

Der Erfindung liegt daher die Aufgabe zugrunde, eine Schneckenwellen-Kupplung der gattungsgemäßen Art so auszugestalten, dass das Öffnen bzw. Lösen der Kupplung und das Wiederverbinden der Abtriebs-Welle mit der Schnecken-Welle einfach und schnell vonstatten geht.

Diese Aufgabe wird erfindungsgemäß bei einer Schneckenwellen-Kupplung nach dem Oberbegriff des Anspruches 1 durch die Merkmale im Kennzeichnungsteil des Anspruches 1 gelöst.

Durch die erfindungsgemäßen Maßnahmen wird gleichsam ein Bajonettverschluss zwischen der Schneckenwelle und der Kupplungs-Hülse hergestellt. Zum Lösen oder Herstellen der Verbindung ist lediglich eine Verdrehung der Gewinde-Hülse um einen Bruchteil einer Umdrehung, höchstens also 90°, erforderlich.

Durch die zusätzlichen Verdrehsicherungen nach den Ansprüchen 3 bis 8 wird erreicht, das ein Lösen der Kupplungsverbindungen aufgrund von Vibrationen wirksam unterbunden wird.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Draufsicht auf eine zwischen einem Verteiler-Getriebe und einem Zwei-Schnecken-Extruder angeordnete Schneckenwellen-Kupplung,
- Fig. 2: einen Querschnitt durch Fig. 1 entsprechend der Schnittlinie II-II in Fig. 1,
- Fig. 3: einen Längsschnitt durch eine Schneckenwellen-Kupplung in gegenüber Fig. 1 und 2 stark vergrößerter Darstellung,

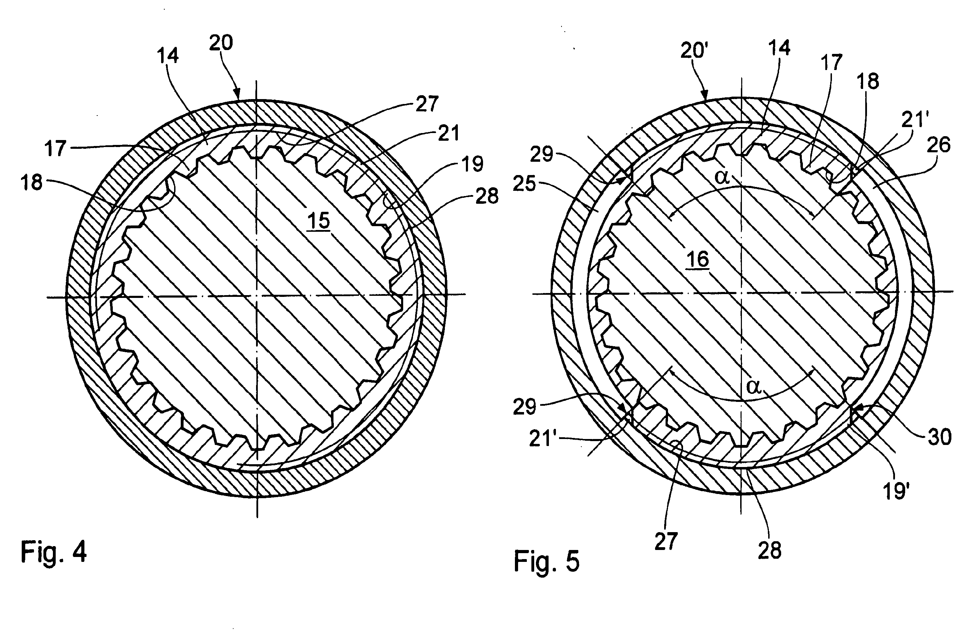

- Fig. 4: einen Querschnitt durch die Schneckenwellen-Kupplung entsprechend der Schnittlinie IV-IV in Fig. 3,
- Fig. 5: einen weiteren Querschnitt durch die SchneckenwellenKupplung entsprechend der Schnittlinie V-V in Fig. 3,

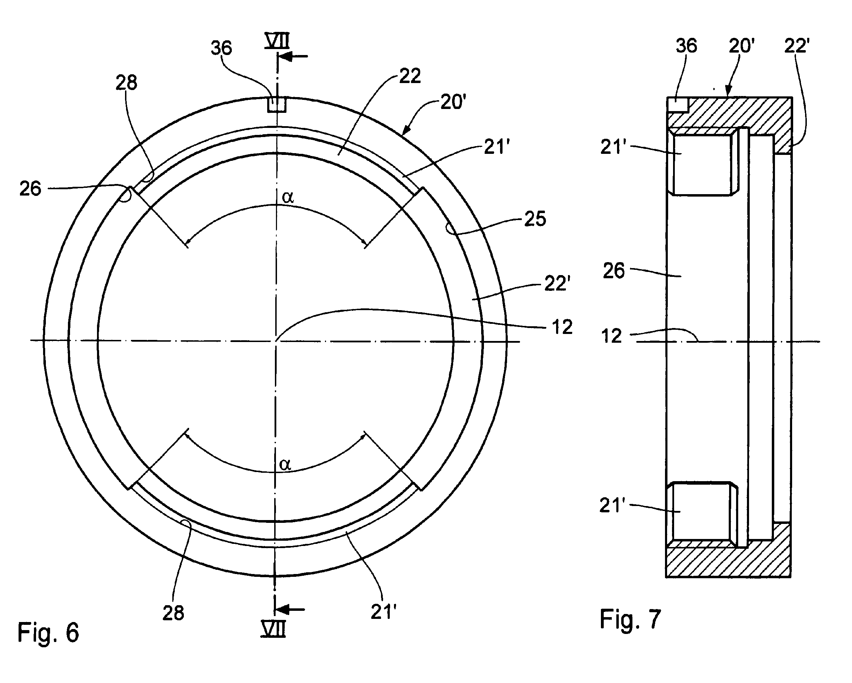

- Fig. 6: eine Stirnansicht einer der Schneckenwelle zugeordneten Gewinde-Hülse,
- Fig. 7: einen Längsschnitt durch die Gewinde-Hülse gemäß der Schnittlinie VII-VII in Fig. 6, und
- Fig. 8: eine Draufsicht auf die Schneckenwellen-Kupplung entsprechend dem Sichtpfeil VIII in Fig. 3.

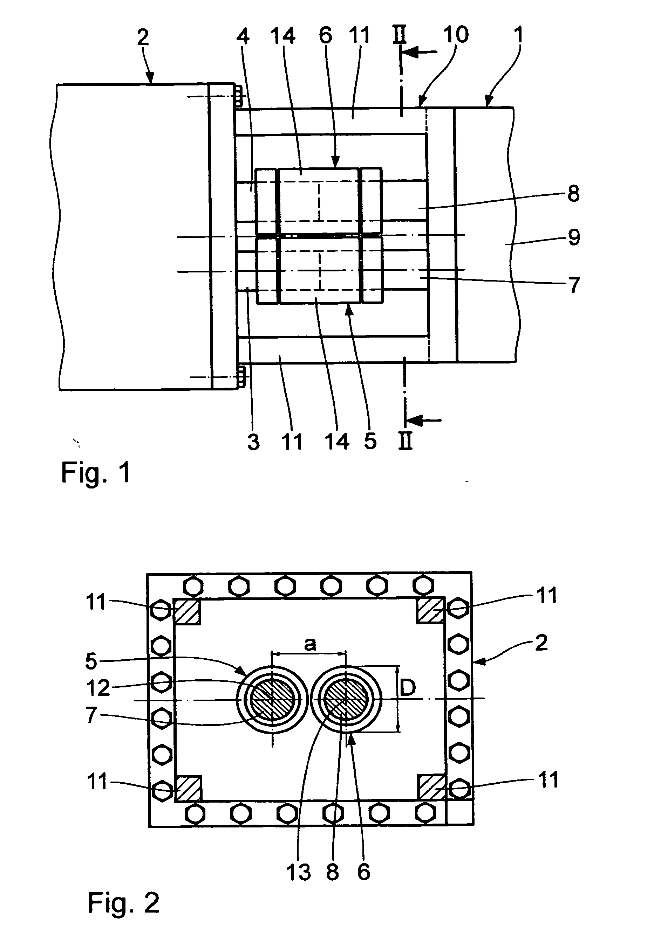

Wie in Fig. 1 und 2 angedeutet ist, wird ein Extruder 1, bei dem es sich um einen Zwei- oder Mehr-Wellen-Extruder 1 handelt, über ein Verteiler-Getriebe 2 von einem nicht dargestellten Motor angetrieben. Hierzu sind Abtriebs-Wellen 3, 4 des Verteiler-Getriebes 2 mittels Schneckenwellen-Kupplungen 5, 6 mit den Schneckenwellen 7, 8 des Extruders 1 drehmoment-übertragend verbunden. Das Verteiler-Getriebe 2 und das Gehäuse 9 des Extruders 1 sind mittels einer sogenannten Laterne 10 miteinander verbunden, die durch Stäbe 11 gebildet sein kann, zwischen denen nur wenig freier Raum vorhanden ist, um die Kupplungen 5, 6 zu öffnen oder zu schließen.

Wie Fig. 1 weiterhin erkennen lässt, ist der Abstand a der Achsen 12, 13 der Schneckenwellen 7, 8 von der Geometrie des Extruders 1 her vorgegeben. Damit ist auch der Außendurchmesser D der Kupplungen 5, 6 vorgegeben; er muss auf jeden Fall etwas kleiner als der Abstand a sein, damit die beiden Schneckenwellen-Kupplungen 5, 6 einander nicht berühren.

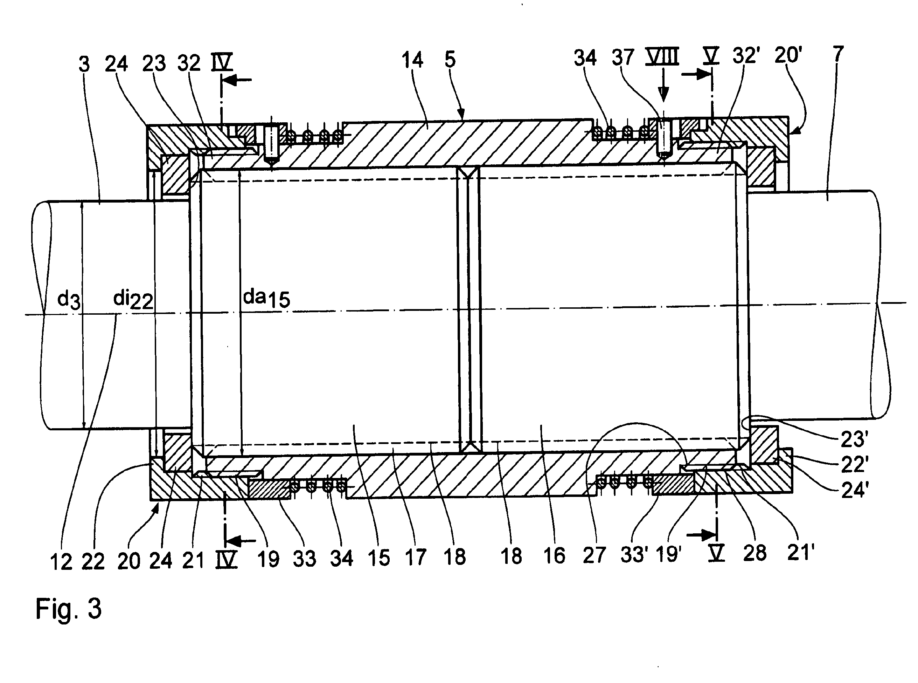

Die Schneckenwellen-Kupplungen 5, 6, von denen nachfolgend nur eine Schneckenwellen-Kupplung 5 dargestellt und beschrieben wird, die untereinander aber völlig identisch sind, weisen eine Kupplungs-Hülse 14 auf, die jeweils einen Kupplungs-Zapfen 15 der Abtriebs-Welle 3 und einen Kupplungs-Zapfen 16 der Schneckenwelle 7 aufnimmt, wie insbesondere Fig. 3 entnehmbar ist. Sowohl die Kupplungs-Hülse 14 als auch die Kupplungs-Zapfen 15, 16 weisen eine Längs-Verzahnung 17 bzw. 18 auf, mittels derer eine drehmomentfeste Verbindung der Abtriebs-Welle 3 über die Kupplungs-Hülse 14 mit der Schneckenwelle 7 erreicht wird.

Auf der dem Verteiler-Getriebe 2 zugewandten Seite weist die Kupplungs-Hülse 14 ein als Fein-Gewinde ausgebildetes Außen-Gewinde 19 auf, auf das eine Gewinde-Hülse 20 mit einem entsprechenden Innen-Gewinde 21 aufgeschraubt ist. Die Gewinde-Hülse 20 weist einen radial nach innen, also zur Achse 12 hin vorspringenden Ringbund 22 auf, dessen Innendurchmesser di22 größer ist als der Außendurchmesser da15 des Kupplungs-Zapfens 15. Dieser Außendurchmesser da15 ist wiederum größer als der Durchmesser d3 der Abtriebs-Welle 3, so dass zwischen der Abtriebs-Welle 3 und dem Kupplungs-Zapfen 15 eine stirnseitige Anschlag-Fläche 23 ausgebildet ist. Zwischen dem Ringbund 22 und der Anschlag-Fläche 23 ist ein zweiteiliger Ring 24 angeordnet, der zum einen gegen den Ringbund 22 und zum anderen gegen die Anschlag-Fläche 23 anliegt und hierdurch eine Fixierung der Kupplungs-Hülse 14 in Richtung der Achse 12 gegenüber der Abtriebs-Welle 3 bewirkt. Soweit diese Ausgestaltung hier beschrieben ist, entspricht sie dem allgemein üblichen Stand der Technik.

Auf der dem Extruder 1 zugewandten Seite ist die Kupplungs-Hülse 14 in sehr ähnlicher Weise mit der Schneckenwelle 7 verbunden, weshalb alle gleichen oder fast gleichen Teile mit den selben Bezugsziffern bezeichnet werden, wie auf der dem Verteiler-Getriebe 2 zugewandten Seite. Sie sind zur Unterscheidung jeweils mit einem hochgestellten Strich versehen.

Ein wesentlicher Unterschied ist, dass das Außen-Gewinde 19' der Kupplungs-Hülse 14 und das Innen-Gewinde 21' der Gewinde-Hülse 20' jeweils mit Ausnehmungen 25 bzw. 26 versehen sind, die bis unter den jeweiligen Gewindegrund 27 bzw. 28 reichen. Die Ausnehmungen 25 und 26 erstrecken sich jeweils über gleiche Winkelabschnitte α wie die nicht, beispielsweise durch Fräsen, entfernten, also stehen gebliebenen Gewinde-Abschnitte 29 bzw. 30 an der Gewinde-Hülse 20' bzw. der Kupplungs-Hülse 14. Im dargestellten Ausführungsbeispiel beträgt der Winkel α 90°, so dass nach dem Aufschieben der Gewinde-Hülse 20' auf die Kupplungs-Hülse 14 eine Drehung der Gewinde-Hülse 20' um den Winkel α, also um beispielsweise 90°, ausreicht, um eine in Richtung der Achse 12 feste Verbindung zwischen der Kupplungs-Hülse 14 und der Gewinde-Hülse 20' und damit über den 2-teiligen Ring 24' zwischen der Kupplungs-Hülse 14 und dem Kupplungs-Zapfen 15 der Schneckenwelle 7 herzustellen. Ein Lösen der Verbindung erfolgt um eine entsprechende Drehung um den Winkel α in entgegengesetzter Richtung. Anstelle des Innen-Gewindes 21' und des Außen-Gewindes 19' können selbstverständlich auch entsprechende Ringprofile ohne Steigung eingesetzt werden, so dass beim Herstellen oder Lösen der Verbindung durch Verdrehen um den Winkel α keine axiale Relativbewegung zwischen Gewinde-Hülse 20' und Kupplungs-Hülse 14 stattfindet.

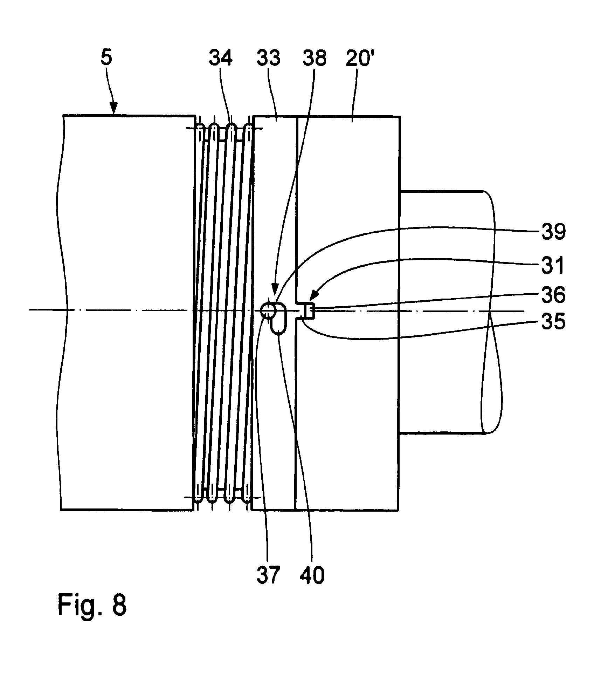

Die beiden Gewinde-Hülsen 20, 20' werden durch zwei identische Verdreh-Sicherungen 31 gegen Verdrehen gesichert, die identisch ausgebildet sind, weshalb sie nur einmal beschrieben werden müssen. Auf dem die jeweiligen Außen-Gewinde 19 bzw. 19' tragenden verjüngten Kupplungs-Hülsen-Abschnitt 32 bzw. 32' der Kupplungs-Hülse 14 ist ein Sicherungs-Ring 33 angeordnet, der mittels einer vorgespannten Schrauben-Druck-Feder 34 in Richtung zur jeweiligen Gewinde-Hülse 20 bzw. 20' gedrückt wird. Er trägt an der der jeweiligen Gewinde-Hülse 20, 20' zugewandten Seite einen Verriegelungs-Vorsprung 35, der in der Zeichnung dargestellten gesicherten Position in eine entsprechende Verriegelungs-Ausnehmung 36 an der Gewinde-Hülse 20 bzw. 20' eingreift. Der Sicherungs-Ring 33 selber ist wiederum durch einen in den Hülsen-Abschnitt 32 bzw. 32' hineingeschraubten Sicherungs-Stift 37 gegen Verdrehung gesichert, der eine Winkel-Nut 38 des Sicherungs-Rings 33 durchsetzt, wie insbesondere Fig. 8 entnehmbar ist. Diese Winkel-Nut 38 weist einen in Richtung der Achse 12 verlaufenden ersten Nut-Schenkel 39 auf, in dem sich der Sicherungs-Stift 37 in der in der Zeichnung dargestellten Verriegelungs-Stellung befindet. Die Winkel-Nut 38 weist weiterhin einen sich senkrecht zum Nut-Schenkel 39 erstreckenden zweiten Nut-Schenkel 40 auf, in den der Sicherungs-Stift 37 eingreift, wenn der Sicherungs-Ring 33 so weit gegenüber der Gewinde-Hülse 20 bzw. 20' in Richtung der Achse 12 verschoben ist, dass der Verriegelungs-Vorsprung 35 außer Eingriff mit der Verriegelungs-Ausnehmung 36 kommt. Dann kann der Sicherungs-Ring 33 so weit verdreht werden, dass er in einer von der Gewinde-Hülse 20 bzw. 20' freien Stellung gehalten wird, also nicht mehr gegen diese gedrückt wird.

Wenn beispielsweise die Schneckenwellen 7, 8 des Extruders 1 gezogen werden sollen, muss die jeweilige Schneckenwellen-Kupplung 5 bzw. 6 gelöst werden. Hierzu werden zuerst die beiden Sicherungs-Ringe 33 mittels eines geeigneten Werkzeugs zum Lösen der Verbindung zwischen Verriegelungs-Vorsprung 35 und Verriegelungs-Ausnehmung 36 von der Gewinde-Hülse 20 bzw. 20' in Richtung der Achse 12 gegen den Druck der Feder 34 von der Gewinde-Hülse 20 bzw. 20' abgehoben und durch leichtes Verdrehen in ihrer abgehobenen Position gehalten, in der der Sicherungs-Stift 37 in den zweiten Nut-Schenkel 40 eingreift. Wenn die Verspannung zwischen den beiden Kupplungs-Zapfen 15, 16 der Kupplungs-Hülse 14 noch zu groß ist, wird die Gewinde-Hülse 20 an der dem Verteiler-Getriebe 2 benachbarten Seite geringfügig verdreht, so dass die durch das Aneinanderliegen der Kupplungs-Zapfen 15, 16 bedingte innere Verspannung aufgehoben wird. Anschließend wird die Gewinde-Hülse 20' um den Winkel α verdreht, wodurch die Gewinde-Abschnitte 29 in die Ausnehmung 26 und die Gewinde-Abschnitte 30 in die Ausnehmung 25 gelangen, so dass die Gewinde-Hülse 20' von der Kupplungs-Hülse 14 abgezogen werden kann. Der zweiteilige Ring 24' kann entfernt werden. Die Gewinde-Hülse 20' kann beim Abziehen der Schneckenwelle 7 über den Kupplungs-Zapfen 15 abgestreift werden. Das Herstellen der Verbindung zwischen Abtriebs-Welle 3 und Schneckenwelle 7 nach dem Wiedereinsetzen der Schneckenwelle 7 geht in umgekehrter Reihenfolge vonstatten.

## Patentansprüche

1. Schneckenwellen-Kupplung zur Verbindung einer Abtriebs-Welle (3, 4) eines Getriebes (2) und einer koaxial angeordneten Schneckenwelle (7, 8) eines Extruders (1),
- mit einem der Schneckenwelle (7, 8) zugeordneten Kupplungs-Zapfen (15) der Abtriebs-Welle (3, 4),
- mit einem dem Kupplungs-Zapfen (15) der Abtriebs-Welle (3, 4) zugewandten Kupplungs-Zapfen (16) der Schneckenwelle (7, 8),
- mit einer die Kupplungs-Zapfen (15, 16) aufnehmenden und mittels Längs-Verzahnungen (17, 18) miteinander drehfest verbindenden Kupplungs-Hülse (14),
- mit einem die Kupplungs-Hülse (14) mit der Abtriebs-Welle (3, 4) in ihrer Längsrichtung fest verbindenden Gewinde-Hülse (20), die mittels eines Innen-Gewindes (21) auf ein Außen-Gewinde (19) der Kupplungs-Hülse (14) geschraubt ist und
- mit einem die Kupplungs-Hülse (14) mit der Schnecken-Welle (7, 8) in ihrer Längsrichtung fest verbindenden Gewinde-Hülse (20'), die mittels eines einen Gewinde-Grund (28) aufweisenden Innen-Gewindes (21'), auf ein einen Gewinde-Grund (27) aufweisendes Außen-Gewinde (19') der Kupplungs-Hülse (14) geschraubt ist,
**dadurch gekennzeichnet,**
**dass** das der Schneckenwelle (7, 8) zugewandte Außen-Gewinde (19') der Kupplungs-Hülse (14) und das Innen-Gewinde (21') der hierauf angeordneten Gewinde-Hülse (20') jeweils abwechselnd mit sich über gleiche Umfangswinkel α erstreckende Ausnehmungen (25, 26) und Gewinde-Abschnitte (29, 30) versehen sind, wobei die Ausnehmungen (25, 26) sich radial zur Achse (12, 13) bis unter den Gewindegrund (27, 28) erstrecken.

2. Schneckenwellen-Kupplung nach Anspruch 1, **dadurch gekennzeichnet,**
**dass** für den Umfangswinkel α gilt: α = 90°.

3. Schneckenwellen-Kupplung nach Anspruch 1, **dadurch gekennzeichnet,**
**dass** den Gewinde-Hülsen (20, 20') eine Verdreh-Sicherung (31) zugeordnet ist.

4. Schneckenwellen-Kupplung nach Anspruch 3, **dadurch gekennzeichnet,**
**dass** die Verdreh-Sicherung (31) einen auf der Kupplungs-Hülse angeordneten Sicherungs-Ring (33) aufweist, wobei zwischen dem Sicherungs-Ring (33) und der Gewinde-Hülse (20, 20') eine drehfeste Verbindung durch eine Ausnehmung (36) und einen in diese eingreifenden Verriegelungs-Vorsprung (35) gebildet ist.

5. Schneckenwellen-Kupplung nach Anspruch 4, **dadurch gekennzeichnet,**
**dass** der Sicherungs-Ring (33) mittels einer Druck-Feder (34) gegen die Gewinde-Hülse (20, 20') gedrückt ist.

6. Schneckenwellen-Kupplung nach Anspruch 4, **dadurch gekennzeichnet,**
**dass** der Sicherungs-Ring (33) in der mit der Gewinde-Hülse (20, 20') verriegelten Stellung gegenüber der Kupplungs-Hülse (14) unverdrehbar festgelegt ist.

7. Schneckenwellen-Kupplung nach Anspruch 4, **dadurch gekennzeichnet,**
**dass** der Sicherungs-Ring (33) in einer von der Gewinde-Hülse (20, 20') abgehobenen, unverriegelten Stellung in Längsrichtung der Schneckenwelle (7, 8) unverschiebbar festgelegt ist.

8. Schneckenwellen-Kupplung nach Anspruch 6 oder 7, **dadurch gekennzeichnet,**
**dass** die Kupplungs-Hülse (14) mit einem Sicherungs-Stift (37) versehen ist, der in eine Winkel-Nut (38) im Sicherungs-Ring (33) eingreift.

## Claims

1. Worm shaft coupling for connecting a driven shaft (3, 4) of a transmission mechanism (2) and a coaxially arranged worm shaft (7, 8) of an extruder (1),
- with a coupling peg (15), associated with the worm shaft (7, 8), of the driven shaft (3, 4),
- with a coupling peg (16), facing the coupling peg (15) of the driven shaft (3, 4), of the worm shaft (7, 8),
- with a coupling sleeve (14) receiving the coupling pegs (15, 16) and connecting them in a non-rotational manner by means of longitudinal teeth (17, 18),
- with a threaded sleeve (20) which rigidly connects the coupling sleeve (14) to the driven shaft (3, 4) in the longitudinal direction thereof and is screwed, by means of an internal thread (21), to an external thread (19) of the coupling sleeve (14) and
- with a threaded sleeve (20') which rigidly connects the coupling sleeve (14) to the worm shaft (7, 8) in the longitudinal direction of the worm shaft (7, 8) and is screwed, by means of an internal thread (21') having a thread root (28), to an external thread (19'), having a thread root (27), of the coupling sleeve (14),
**characterised**
**in that** the external thread (19'), facing the worm shaft (7, 8), of the coupling sleeve (14) and the internal thread (21') of the threaded sleeve (20') arranged thereon are each provided, in alternation, with recesses (25, 26) extending over identical circumferential angles α and threaded portions (29, 30), the recesses (25, 26) extending radially to the axis (12, 13) down to below the thread root (27, 28).

2. Worm shaft coupling according to claim 1, **characterised**
**in that** for the circumferential angle α, the following applies: α = 90°.

3. Worm shaft coupling according to claim 1, **characterised**
**in that** an anti-twist means (31) is associated with the threaded sleeves (20, 20').

4. Worm shaft coupling according to claim 3, **characterised**
**in that** the anti-twist means (31) has a retaining ring (33) arranged on the coupling sleeve, a non-rotational connection being formed between the retaining ring (33) and the threaded sleeve (20, 20') by a recess (36) and a locking projection (35) engaging therewith.

5. Worm shaft coupling according to claim 4, **characterised**
**in that** the retaining ring (33) is pressed against the threaded sleeve (20, 20') by means of a compression spring (34).

6. Worm shaft coupling according to claim 4, **characterised**
**in that** in a position locked to the threaded sleeve (20, 20'), the retaining ring (33) is secured to the coupling sleeve (14) so as to prevent twisting.

7. Worm shaft coupling according to claim 4, **characterised**
**in that** in an unlocked position raised from the threaded sleeve (20, 20'), the retaining ring (33) is secured so as to be non-displaceable in the longitudinal direction of the worm shaft (7, 8).

8. Worm shaft coupling according to claim 6 or 7, **characterised**
**in that** the coupling sleeve (14) is provided with a retaining pin (37) which engages with an angular groove (38) in the retaining ring (33).

## Revendications

1. Accouplement d'arbre de vis destiné à relier un arbre de sortie (3, 4) d'un mécanisme de transmission (2) et un arbre de vis (7, 8) d'une extrudeuse (1) disposé coaxialement, comprenant
- un tourillon d'accouplement (15) de l'arbre de sortie (3, 4) associé à l'arbre de vis (7, 8),
- un tourillon d'accouplement (16) de l'arbre de vis (7, 8) orienté vers le tourillon d'accouplement (15) de l'arbre de sortie (3, 4),
- un manchon d'accouplement (14) logeant les tourillons d'accouplement (15, 16) et les reliant entre eux de manière résistant à la rotation au moyen de dentures longitudinales (17, 18),
- un manchon fileté (20) reliant de manière fixe le manchon d'accouplement (14) à l'arbre de sortie (3, 4) dans sa direction longitudinale, ledit manchon fileté étant vissé au moyen d'un filetage intérieur (21) sur un filetage extérieur (19) du manchon d'accouplement (14) et
- un manchon fileté (20') reliant de manière fixe le manchon d'accouplement (14) à l'arbre de vis (7, 8) dans sa direction longitudinale, ledit manchon fileté étant vissé au moyen d'un filetage intérieur (21') présentant un fond de filet (28) sur un filetage extérieur (19') du manchon d'accouplement (14) présentant un fond de filet (27),
**caractérisé en ce**
**que** le filetage extérieur (19') du manchon d'accouplement (14) orienté vers l'arbre de vis (7, 8) et le filetage intérieur (21') du manchon fileté (20') disposé dessus sont munies chacun alternativement d'évidements (25, 26) s'étendant sur des angles inscrits α égaux et de segments filetés (29, 30), les évidements (25, 26) s'étendant radialement par rapport à l'axe (12, 13) jusque sous le fond de filet (27, 28).

2. Accouplement d'arbre de vis selon la revendication 1, **caractérisé en ce**
**que** l'angle inscrit α est égal à 90°.

3. Accouplement d'arbre de vis selon la revendication 1, **caractérisé en ce**
**qu'**un dispositif de sécurité contre la torsion (31) est associé aux manchons filetés (20, 20').

4. Accouplement d'arbre de vis selon la revendication 3, **caractérisé en ce**
**que** le dispositif de sécurité contre la torsion (31) présente un circlip (33) disposé sur le manchon d'accouplement, une liaison résistant à la rotation étant formée entre le circlip (33) et le manchon fileté (20, 20') par un évidement (36) et une saillie de verrouillage (35) s'engageant dans celui-ci.

5. Accouplement d'arbre de vis selon la revendication 4, **caractérisé en ce**
**que** le circlip (33) est comprimé contre le manchon fileté (20, 20') au moyen d'un ressort de pression (34) .

6. Accouplement d'arbre de vis selon la revendication 4, **caractérisé en ce**
**que** le circlip (33) est fixé de manière à ne pas pouvoir tourner par rapport au manchon d'accouplement (14) dans la position verrouillée avec le manchon fileté (20, 20').

7. Accouplement d'arbre de vis selon la revendication 4, **caractérisé en ce**
**que** le circlip (33) est fixé de manière à ne pas pouvoir se déplacer dans la direction longitudinale de l'arbre de vis (7, 8) dans une position non verrouillée, dans laquelle il est décollé du manchon fileté (20, 20').

8. Accouplement d'arbre de vis selon la revendication 6 ou 7, **caractérisé en ce**
**que** le manchon d'accouplement (14) est muni d'une goupille de sûreté (37) qui s'engage dans une rainure coudée (38) présente dans le circlip (33).
